Europäisches Patentamt

European Patent Office

Office européen des brevets

(19)

(11) Publication number: 0 346 539
A1

## (12) EUROPEAN PATENT APPLICATION

(21) Application number: 88305424.9

(22) Date of filing: 14.06.88

(51) Int. Cl.⁴: **F16H 3/54**

(43) Date of publication of application:
**20.12.89 Bulletin 89/51**

(84) Designated Contracting States:
**AT BE CH DE ES FR GB GR IT LI LU NL SE**

(71) Applicant: **AMERICAN OVERDRIVE, INC**
**820 South Street**
**Redding California 96001(US)**

(72) Inventor: **Belliveau, Norman Reginald**
**1730 North Street**
**Anderson California(US)**

(74) Representative: **Powell, Stephen David et al**
**J.F. Williams & Co. 34 Tavistock Street**
**London WC2E 7PB(GB)**

(54) **Overdrive transmission unit.**

(57) An overdrive transmission unit (10) comprises a drive drum (12) with cylindrical walls (82,282) extending in opposite directions from the end wall of the drum; the walls define chambers which accomodate at least part of the clutch and brake systems (17,18,26,28) for activating the drive mode or overdrive mode of operation.

FIG. 2

EP 0 346 539 A1

# OVERDRIVE TRANSMISSION UNIT

The present invention relates generally to overdrive units for use with automobiles with standard or automatic transmissions and, more specifically, to overdrive transmission units of small size which utilize a planetary gear mechanism in conjunction with clutch packs in order to produce an overdrive transmission unit providing an additional gear ratio for purposes of increasing fuel economy and, in some cases, top speeds of a vehicle. In the past, the use of multiple clutch packs to accomplish the control of the planetary transmission mechanism required a significant amount of axial space within the transmission, as well as a large diameter which, in some circumstances, limited the use of the overdrive transmission unit to specific automobiles, or required modification of an automobile prior to installation.

In attempts to build a satisfactory overdrive transmission unit, inventors in the past have addressed their efforts to techniques of reducing the amount of space required, techniques to ensure smooth engagement of the gearing, and techniques of timing the change from direct drive to overdrive. While control systems for use with overdrive units have been proposed, most of these systems have required manual shifting of a lever which either physically controlled an overdrive value or controlled an electronic circuit which controlled the overdrive valve. Other automatic overdrive units require rigid connection of their body to the frame of an automobile and installation of the unit midrange in the drive shaft of the automobile or attachment of the unit to the differential.

None of the prior art provides an automatic overdrive transmission unit which sufficiently reduces both the diameter and the axial space required for installation to make the unit usable, in the majority of automobiles without modification to the body or frame of the automobile.

The present invention seeks to provide an overdrive transmission unit which may easily be retrofitted to existing automobiles to increase efficiency in fuel usage.

The present invention also seeks to provide an overdrive transmission unit which retrofits to automatic tansmissions and, with minor modifications and the addition of a pump, retrofits to automobiles with amnual transmissions.

The present invention also seeks to provide a compact overdrive transmission unit, thereby faciliatatin installation in a broader range of automobiles and trucks than has been possible with other devices.

The present invention further seeks to provide an overdrive transmission unit which included an electrical circuit which enables the overdrive unit to be shifted through the use of a switch.

According to a first aspect of the present invention, there is provided an overdrive transmission unit comprising a housing defining a substantially cylindrical cavity containing a drive drum with a substantially cylindrical section and an end wall, clutch means for activating a direct drive mode of operation of the transmission unit, brake means for activating an overdrive mode of operation of the transmission unit, clutch actuating means and brake actuating means, characterised in that the end wall has a first substantially cylindrical wall extending therefrom in an axial direction opposite to the substantially cylindrical section of the drum and defining a first axially-extending chamber, in that the end wall has a second substantially cylindrical wall extending therefrom in an axial direction on the same side as the substantially cylindrical section of the drum and defining a second axially-extending chamber, and in that at least a substantial part of the clutch means and/or the clutch actuating means, and at least a substantial part of the brake means and/or the brake actuating means are arranged in respective ones of the chambers.

According to a second aspect of the present invention, there is provided an overdrive transmission unit, comprising:

a housing having a substantially cylindrical cavity therein;

a drive drum constructed of a unitary piece of material positioned inside said substantially cylindrical cavity of said housing, having;

a substantially cylindrical section with an inner diameter;

a wall bounding one end of said substantially cylindrical section;

a first substantially cylindrical extension extending outward from said wall opposite said substantially cylindrical section and having an outer diameter substantially smaller than said inner diameter of said substantially cylindrical section, and a second substantially cylindrical extension extending outward from said wall in the same direction as said substantially cylindrical section, having an outer diameter smaller than said inner diameter of said substantially cylindrical section and said diameter of said first substantially cylindrical extension;

a planetary gear system substantially enclosed within said inner diameter of said substantially cylindrical section of said substantially cylindrical drive drum and within the axial length of said substantially cylindrical drive drum and consisting substantially of:

a planetary gear carrier rotatably supporting at least one planetary gear;

a sun gear which engages said planetary gear and said substantially cylindrical drive drum, and

a ring gear which engages said planetary gear, having a diameter substantially smaller than said inner diameter of said substantially cylindrical section of said substantially cylindrical drive drum

a clutch pack consisting of a clutch pressure plate and at least two clutch plates having an inner diameter substantially the same as said diameter of said ring gear and an outer diameter substantially the same as said inner diameter of said substantially cylindrical section of said substantially cylindrical drive drum, said clutch plates being connected alternately to said inner diameter of said substantially cylindrical section of said substantially cylindrical drive drum and said diameter of said ring gear;

first compression means for compression said clutch pack substantially enclosed within said inner diameter of said substantially cylindrical section of said substantially cylindrical drive drum and within said axial length of said substantially cylindrical drive drum

a brake substantially enclosed within said substantially cylindrical cavity of said housing, having a clutch pressure plate and at least two clutch plates, at least one of which is connected to said housing or means substantially stationary with respect to said housing and at least one of which is connected to said first substantially cylindrical extension of said drive drum, and

second compression means for compressing said clutch plates of said brake.

An advantage of the first and second substantially cylindrical walls or extensions is that they permit the unit to be installed in a very small space. Because of the structure utilized, the clutch and brake system occupy a minimal space no larger than the diameter of the drive drum. This results because of the unitary construction utilizing two opposing walls or extensions which enable construction with smaller clutch and brake units. The arrangement is also compact in an axial direction.

A preferred embodiment of the present invention will now be described, by way of example only, with reference to the accompanying drawings, of which

Figure 1 is a perspective view showing an overdrive transmission unit according to the present invention attached to an automatic transmission which is attached to an automobile engine, and further showing the connection of the oil-pressure passage between the overdrive transmission unit and the automatic transmission;

Figure 2 is a cross-sectional view of the overdrive transmission unit taken along line 2-2 of Figure 1;

Figure 3 is a cross-sectional view of the upper half of Figure 2 showing the positioning of the internal parts of the overdrive transmission unit when the unit is in direct drive condition; and

Figure 4 is a cross-sectional view of the top portion of Figure 3 showing the position of the individual parts of the overdrive transmission unit when the unit is in an overdrive condition.

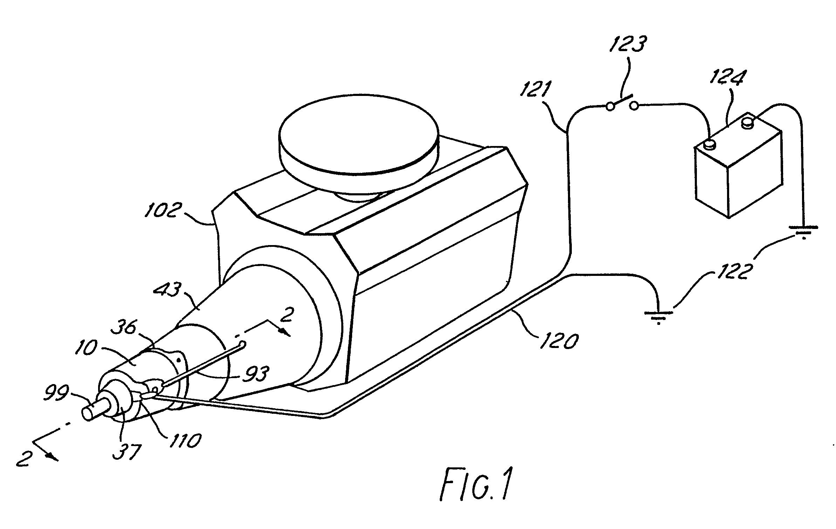

Figure 1 shows the overdrive transmission unit 10 coupled to automatic transmission 43 and held in place by adapter plate 36, further showing automatic transmission 43 coupled to automobile engine 102. The original tail housing 37 utilized with automatic transmission 43 is shown attached to the overdrive transmission unit 10. Overdrive output shaft 99 is shown and is adapted to couple to the drive shaft of the automobile in which it is installed. An oil line 93 provides oil pressure from automatic transmission 43 to overdrive transmission unit 10. Overdrive transmission unit 10 is activated by a solenoid 110 by means of an electrical circuit consisting of a battery 124, one terminal of which is a grounded terminal 122 and the other terminal of which supplies power to the solenoid through switch 123 and line 121. Grounding of the solenoid is shown as line 120, completing the circuit When switch 123 is closed, power is routed through line 121 to solenoid 110, activating overdrive transmission unit 10 in overdrive condition.

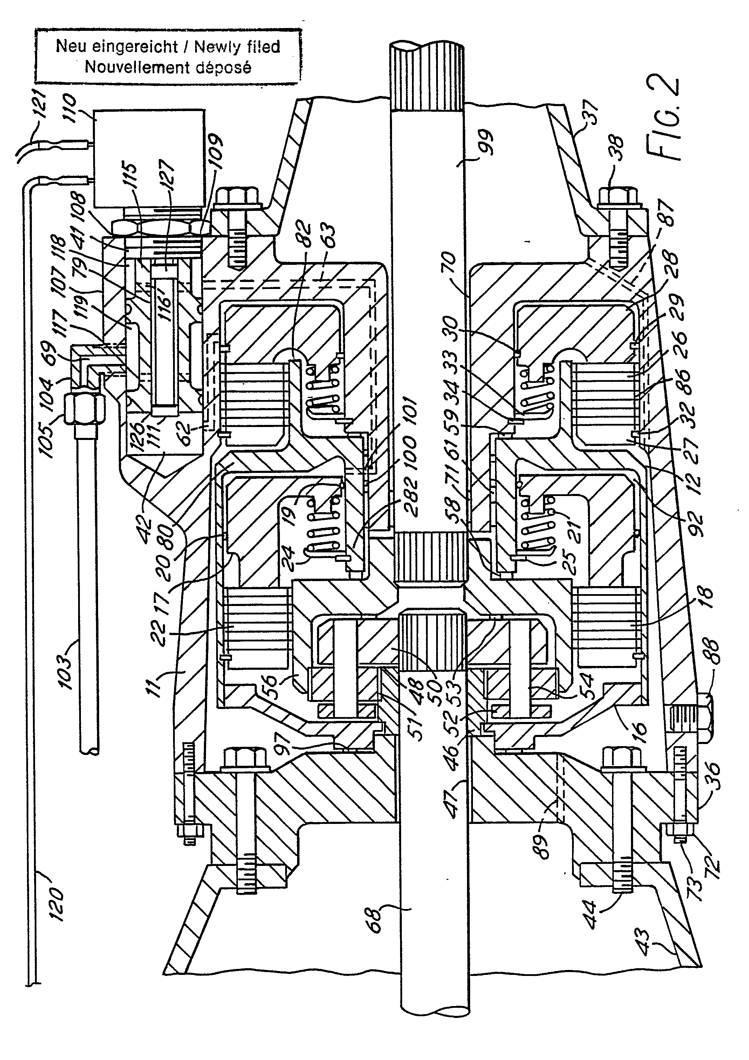

Figure 2 is a cross-section of the overdrive transmission unit 10 taken along line 2-2 of Figure 1. Overdrive transmission case 11 is attached to adapter plate 36 by studs 73 and nuts 72. Adapter plate 36 is attached to automatic transmission case 43 by bolts 44.

Overdrive transmission case 11 is attached to original tail housing 37 by bolts 38. Transmission tail shaft 68 is splined to planetary carrier 50, thereby turning planetary carrier 50 and 52. Planetary gear thrust bearing 53 is provided for support of planetary carrier 50. Planetary gears 51 turn on pins 54. Sun gear 46 engages planetary gears 51, and is held in place by bushings 47. Sun gear 46 is splined to direct drive lug ring 16, which is splined to direct drive drum 12. Thrust bearing 97 is provided to absorb the thrust of direct drive lug ring 16. Thrust bearing 48 is provided to absorb the rearward thrust of sun gear 46. Output ring gear 56 engages planetary gears 51, and is further splined to output shaft 99. Rearward thrust of output ring gear 56 is absorbed by thrust bearing 58 on extension 282. Output shaft 99 is supported by bushings 70 and 71. Direct drive clutch pack 18 is provided, and its individual plates are alternately lugged to output ring gear 56 and to direct drive drum 12. Rearward thrust of direct drive drum 12 is absorbed by thrust bearing 59, and bushing 61 is provided as bearing support to direct drive drum 12. When oil pressure is supplied to direct drive clutch piston 17, direct drive clutch pack 18 is compressed against direct drive pressure plate 22, thereby activating the direct drive mode of the overdrive transmission unit 10. Seals 19 and provide an hydraulic seal when oil pressure is applied to direct drive clutch piston 17. When no oil pressure is applied, direct drive clutch piston 17 is held in an inactive position by direct drive clutch piston return springs 21, which are held in place by direct drive spring retainers 24. Snap ring 23 prevents direct drive clutch pressure plate 22 from moving axially, and snap ring 25, one end of each of which is fixed to extension 282, holds direct drive spring retainer 24 in place. Overdrive brake 26, which consists of a clutch pack, is provided, and its individual plates are alternately lugged to automatic overdrive transmission case 11 by locking grooves 86, and to extension 82 of direct drive drum 12. When oil pressure is applied to overdrive brake piston 28, overdrive brake 26 compresses against overdrive brake pressure plate 27, thereby activating the overdrive condition of the overdrive transmission unit 10. Seals 29 and 30 provide an hydraulic seal when oil pressure is applied to overdrive brake piston 28. When no oil pressure is applied, overdrive brake piston 28 is held in an inactive position by overdrive brake piston return springs 31, which are held in place by overdrive springs retainers 33. Snap ring 32 prevents overdrive brake pressure plate 27 from moving axially, and snap ring 34 holds overdrive spring retainer 33 in place. Valve bore 42 is designed to accept an electrically controlled oil valve which routes oil either from hydraulic pressure port 69 to overdrive oil passage 62, or to direct drive oil passage 63. Threads 41 are provided to facilitate the mounting of the oil valve assembly, and seal 109 is provided to eliminate oil leakage. Nut 108 holds solenoid 110 and the valve assembly in position. This is the valve that is activated and deactivated electrically by the driver. More specifically, the valve consists of a valve body 115 having relieved areas 118 and 119, holes 116 and 117 and a hole 79 into which pintle 111 fits. Seals 106 and 107 are provided to restrict oil movement between relieved areas 118 and 119 and valve bore 42. Pintle 111 has two enlarged sections 126 and 127 which act as seals to control the flow of oil. Pintle 111 is connected to solenoid 110 so that its position shifts laterally when solenoid 110 is activated. Solenoid 110 is electrically controlled by switch 123 through electrical lines 120 and 121. Oil is routed from transmission 43 through oil line 103, fitting 105, nipple 104 and hydraulic pressure port 69 to the valve assembly. Oil drain plug 88 is provided to drain oil, and oil return passage 89 is provided to return excess oil to the transmission 43. Sealing rings 100 and 101 maintain oil, pressure at oil passage 63. The direct drive drum 12 is sized both in diameter and axially to allow placement of the planetary gear system, consisting of the sun gear 46, ring gear 56 and planetary gear housing 50 and planetary gears 51, in its interior, in addition to the direct drive clutch system, consisting of direct drive clutch pack 18, direct drive clutch pressure plate 22 and drive clutch piston 17 and related parts. Direct drive drum 12 is substantially cylindrical and includes direct drive cylinder 92, in which direct drive clutch piston 17 is positioned. Cylinder 92 is partly defined by extension 282. The plates of direct drive clutch pack 18 and direct drive clutch pressure plate 22 have an inner diameter which substantially matches the diameter of ring gear 56 and an outer diameter which substantially matches the diameter of direct drive cylinder 92 to facilitate the placement of the entire planetary gear system completely within the inner diameter of the direct drive clutch pack 18 so that the unit's axial space requirements are substantially reduced. Extension 82 of direct drive drum 12 is substantially cylindrical and is so positioned and of a diameter sufficiently smaller than that of the direct drive cylinder 92 that it facilitates use of an overdrive brake pack 26 of a drive sufficiently small that the outer diameter of brake pack 26 is substantially the same as or less than the diameter of direct drive drum 12. The diameter of extension 82 is such that it substantially matches the inner diameter of the clutch plates utilized in overdrive brake pack 26 so that alternate clutch plates of overdrive brake pack 26 are lugged to extension 82 of direct drive drum 12. As a result of the positioning and placement of components inside direct drive drum 12 and the extension 82 of direct drive drum 12, an assembled overdrive unit of considerably smaller diameter and of considerably less axial length than is otherwise available is produced.

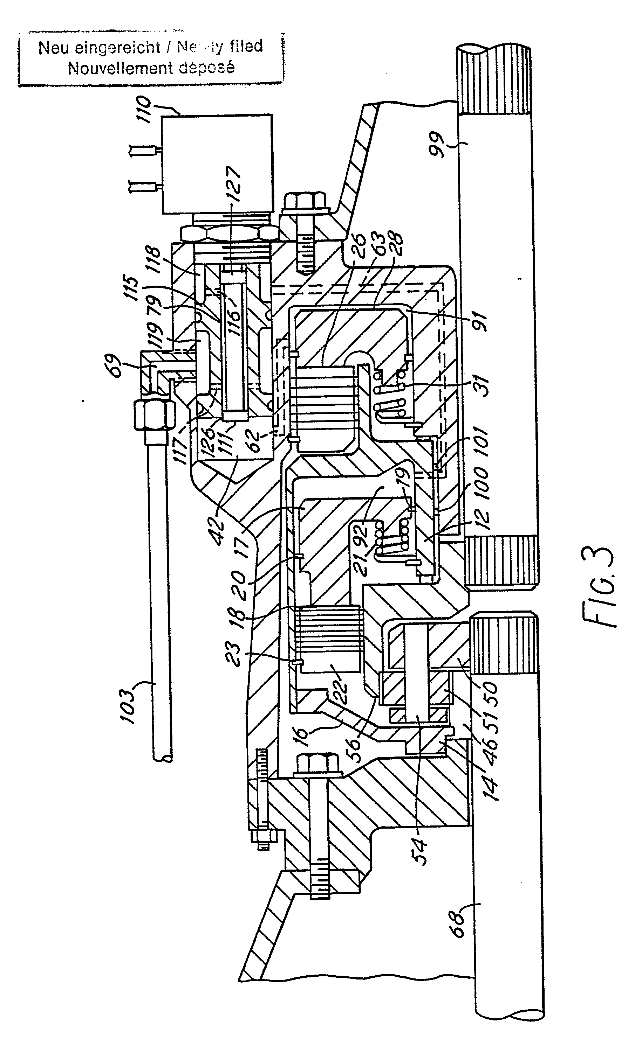

Figure 3 shows the direct drive condition of overdrive transmission unit 10 with switch 123 turned off. Pintle 111 of the oil valve assumes the position shown in Figure 3 and is held in that position by solenoid 110. When the pintle 111 is in the position shown in Figure 3 and the overdrive transmission unit 10 is in direct drive condition, oil travels through oil line 103 to hydraulic pressure port 69 to recessed area 119, through hole 117 to bore 79, through hole 116 to recessed area 118 and through direct drive oil passage 63 to direct drive cylinder 92, and activates direct drive clutch piston 17, which compresses direct drive clutch pack 18 against direct drive clutch pressure plate 22. Direct drive clutch pack 18 consists of a series of clutch plates which are lugged alternately to direct drive drum 12 and to output ring gear 56. When the unit is in the direct drive condition, the drive path is from transmission tail shaft 68 to planetary gear housing 50, to planetary gears 51, to sun gear 46, to direct drive lug ring 16, to direct drive drum 12, through direct drive clutch pack 18, to output ring gear 56, to output shaft 99.

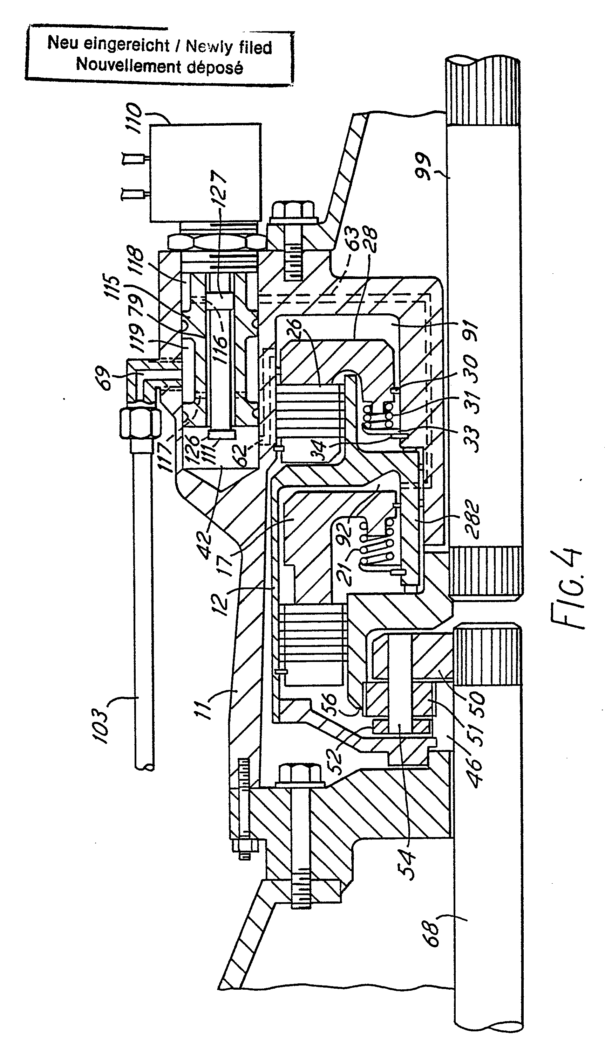

Figure 4 shows the overdrive transmission unit 10 in an overdrive condition. When the driver turns switch 123 on , solenoid 110 activates, pushing and holding pintle 111 in position as shown in Figure 4. With pintle 11 in position as shown in Figure 4, oil is routed through oil line 103 to hydraulic pressure port 69 into recessed area 119, through hole 117 into bore 79, into valve bore 42 and through overdrive oil passage 62 to overdrive cylinder 91, creating pressure against overdrive brake piston 28. When overdrive brake piston 28 is activated, overdrive brake pack 26, which consists of a series of clutch plates which are lugged alternately to the overdrive transmission case 11 and to direct drive drum 12, causes direct drive drum 12 to cease rotation. This further locks direct drive lug ring 16, which is directly splined to sun gear 46, thereby activating the overdrive condition in the combination of sun gear 46, planetary gears 51 and output ring gear 56. When the unit is in this condition, the drive path is from transmission tail shaft 68 to planetary gear housing 50, to planetary gears 51, to output ring gear 56, to overdrive output shaft 99.

With the addition of a pressure pump and oil reservoir and the use of adapter plates or modification of the over drive transmission case 11, the overdrive transmission unit 10 may be used in conjunction with standard-transmission automobiles.

## Claims

1. An overdrive transmission unit (10) comprising a housing (11) defining a substantially cylindrical cavity containing a drive drum (12) with a substantially cylindrical section and an end wall, clutch means (18) for activating a direct drive mode of operation of the transmission unit, brake means (26) for activating an overdrive mode of operation of the transmission unit, clutch actuating means (17) and brake actuating means (28), characterised in that the end wall has a first substantially cylindrical wall (82) extending therefrom in an axial direction opposite to the substantially cylindrical section of the drum (12) and defining a first axially-extending chamber, in that the end wall has a second substantially cylindrical wall (282) extending therefrom in an axial direction on the same side as the substantially cylindrical section of the drum (12) and defining a second axially-extending chamber, and in that at least a substantial part of the clutch means (18) and/or the clutch actuating means (17), and at least a substantial part of the brake means (26) and/or the brake actuating means (28) are arranged in respective ones of the chambers.

2. A unit according to claim 1, wherein the brake means (26) is arranged between the first substantially cylindrical wall (82) and the housing (11).

3. A unit according to claim 2, wherein the brake actuating means (28) is located within the housing (11) and is arranged axially of the brake means (26) on the side thereof remote from the end wall of the drum (12).

4. A unit according to any preceding claim, wherein the clutch actuating means (17) is arranged between the second substantially cylindrical wall (282) and the substantially cylindrical section of the drum (12).

5. A unit according to claim 4, wherein the clutch means (180) is located within the substantially cylindrical section of the drum (12) and is arranged axially of the clutch actuating means (17) on the side thereof remote from the end wall of the drum (12).

6. An overdrive transmission unit (10), comprising:

a housing (11) having a substantially cylindrical cavity therein;

a drive drum (12) constructed of a unitary piece of material positioned inside said substantially cylindrical cavity of said housing, having:

a substantially cylindrical section with an inner diameter;

a wall bounding one end of said substantially cylindrical section;

a first substantially cylindrical extension (82) extending outward from said wall opposite said substantially cylindrical section and having an outer diameter substantially smaller than said inner diameter of said substantially cylindrical section, and a second substantially cylindrical extension (282) extending outward from said wall in the same direction as said substantially cylindrical section, having an outer diameter smaller than said inner diameter of said substantially cylindrical section and said diameter of said first substantially cylindrical extension;

a planetary gear system substantially enclosed within said inner diameter of said substantially cylindrical section of said substantially cylindrical drive drum and within the axial length of said substantially cylindrical drive drum and consisting substantially of:

a planetary gear carrier (50) rotatably supporting at least one planetary gear (51) ;

a sun gear (46) which engages said planetary gear and said substantially cylindrical drive drum, and

a ring gear (56) which engages said planetary gear, having a diameter substantially smaller than said inner diameter of said substantially cylindrical section of said substantially cylindrical drive drum;

a clutch pack (18) consisting of a clutch pressure plate (22) and at least two clutch plates having an inner diameter substantially the same as said diameter of said ring gear and an outer diameter substantially the same as said inner diameter of said substantially cylindrical section of said substantially cylindrical drive drum, said clutch plates being connected alternately to said inner diameter of said substantially cylindrical section of said substantially cylindrical drive drum and said diameter of said ring gear;

first compression means (17) for compressing said clutch pack substantially enclosed within said inner diameter of said substantially cylindrical section of said substantially cylindrical drive drum and within said axial length of said substantially cylindrical drive drum;

a brake (26) substantially enclosed within said substantially cylindrical cavity of said housing, having a clutch pressure plate (27) and at least two clutch plates, at least one of which is connected to said housing or means substantially stationary with respect to said housing and at least one of which is connected to said first substantially cylindrical extension (82) of said drive drum, and

second compression means (28) for compressing said clutch plates of said brake.

7. A unit according to claim 6, including a first shaft (68) connected to said planetary gear carrier and a second shaft (99) connected to said ring gear.

8. A unit according to claim 6 or 7 wherein:

said first compression means consists substantially of a first cylinder, a first hydraulically operated piston (17) inside said first cylinder and means (69,63) for supplying pressurized fluid to said first cylinder to operate said first hydraulically operated piston, thereby compressing said clutch plates of said clutch pack (18), and

said second compression means consists substantially of a second cylinder, a second hydraulically operated piston (28) inside said second cylinder and means (69,62) for supplying pressurized fluid to said second cylinder to operate said second hydraulically operated piston, thereby compressing said clutch plates of said brake (26).

9. A unit according to claim 8, wherein said housing (11) has a substantially cylindrical bore (42) for accepting a valve, a first hole for routing fluid to said bore, a second hole for routing fluid from said bore to said first cylinder and a third hole for routing fluid from said bore to said second cylinder, and including a multi-position valve (115) placed in said bore whereby fluid is routed from said first hole to said second hole when said multi-position valve is in a first position and from said first hole to said third hole when said multi- position valve is in a second position.

10. A unit according to claim 9, including activating means (110,123) for changing the position of said multi-position valve from a remote location.

FIG.1

EP 0 346 539 A1

FIG.2

EP 0 346 539 A1

FIG.3

EP 0 346 539 A1

FIG.4

EP 0 346 539 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-2 073 365 (ZAHNRADFABRIK FRIEDRICHSHAFEN) <br> * Whole document * <br> --- | 1-7 | F 16 H 3/54 |
| X | DE-C- 488 062 (W. BEARDMORE) <br> * Whole document * <br> --- | 1 | |
| A | US-A-4 387 607 (SAKAKIBARA) <br> * Figure 3; column 2, lines 20-33; column 3, lines 39-50 * <br> --- | 1 | |
| E | US-A-4 750 384 (BELLIVEAU) <br> ----- | 1-9 | |
| | | | TECHNICAL FIELDS SEARCHED (Int. Cl.4) |
| | | | F 16 H <br> B 60 K |

The present search report has been drawn up for all claims

| Place of search | Date of completion of the search | Examiner |
|---|---|---|
| THE HAGUE | 10-02-1989 | BEERNAERT J.E. |